# EUROPEAN PATENT SPECIFICATION

(11) **EP 4 471 940 B1**
(45) Date of publication and mention of the grant of the patent: **29.10.2025**
(21) Application number: 23907294.5
(22) Date of filing: 11.09.2023
(51) Int. Cl.: F16L 21/03, H01M 10/6556, H01M 50/213, H01M 10/6557, H01M 10/6568, H01M 10/625, H01M 10/613

(54) **BATTERY PACK AND VEHICLE COMPRISING SAME**
BATTERIEPACK UND FAHRZEUG DAMIT
BLOC-BATTERIE ET VÉHICULE LE COMPRENANT

(30) Priority: 23.12.2022 KR 20220183751; 17.08.2023 KR 20230107943
(43) Date of publication of application: 04.12.2024
(73) Proprietor: LG Energy Solution, Ltd., Seoul 07335 (KR)
(72) Inventor: BAEK, Seung-Ryul, Daejeon 34122 (KR); YANG, Jin-Oh, Daejeon 34122 (KR); JUNG, In-Hyuk, Daejeon 34122 (KR)
(74) Representative: Plasseraud IP
(86) International application number: PCT/KR2023/013603
(87) International publication number: WO 2024/136007

(56) References cited:
- WO-A2-2009/029138
- CN-A- 108 346 839
- DE-A1- 10 238 235
- FR-A- 1 118 023
- KR-A- 20130 062 056
- KR-A- 20150 035 264
- KR-A- 20180 010 989
- KR-A- 20220 144 730
- US-A1- 2014 093 755
- US-A1- 2021 167 445

## Description

### TECHNICAL FIELD

The present disclosure relates to a battery pack and a vehicle including the same, and more specifically, to a battery pack capable of guiding uniform distribution of a cooling fluid and a vehicle including the same.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module including at least one battery cell first, and then configure a battery pack or a battery rack by using such at least one battery module and adding other components.

In the case of a conventional battery pack, it is configured to include a battery module including a plurality of battery cells and a pack case accommodating the battery module. Here, the battery module includes battery cells and may be provided with a plurality of cooling tubes through which a cooling fluid flows to cool the battery cells.

However, in the case of a conventional battery pack, when a cooling fluid is supplied to a plurality of cooling tubes, it is difficult to distribute the cooling fluid uniformly to each cooling tube, resulting in uneven flow of the cooling fluid, whereby there is a problem of deteriorating cooling performance.

Documents DE 102 38 235 A1, US 2014/083755 A1, WO 2009§029138 A1 and CN 108 346 839 A relate to the thermal management of a pack case and describe tubes for circulating a cooling fluid.

### DISCLOSURE

### Technical Problem

The present disclosure is designed to solve the problems of the related art, and therefore the present disclosure is directed to providing a battery pack capable of uniformly distributing a cooling fluid to each of a plurality of cooling tubes, and a vehicle including the same.

**In** addition, the present disclosure is directed to providing a battery pack that facilitates the formation of cooling channels and is more advantageous for structural design changes, and a vehicle including the same.

However, technical problems to be solved by the present disclosure are not limited to the above-described problems, and other problems not mentioned herein may be clearly understood by those skilled in the art from the following description of the present disclosure.

### Technical Solution

To this end, the invention relates to a battery pack according to claim 1.

The battery pack after the invention may present one or more feature(s) of dependent claims 2 to 12, in any combination allowed by the claims.

The invention also relates to a vehicle according to claim 13.

### Advantageous Effects

According to the various embodiments described above, there is an effect of uniformly distributing the cooling fluid to each of the plurality of cooling tubes.

Accordingly, there is an effect of securing cooling performance through uniform flow of the cooling fluid.

**In** addition, according to the various embodiments described above, there are effects of facilitating the formation of cooling channels and being more advantageous for structural design changes.

In addition, the present disclosure may have various other effects, which will be described in each embodiment, or descriptions of effects that may be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is an overall perspective view of a battery pack according to an embodiment of the present disclosure.
FIG. 2 is a perspective view showing the interior of FIG. 1.
FIG. 3 is an enlarged view of portion A in FIG. 2.
FIG. 4 is an exploded perspective view of a battery pack according to an embodiment of the present disclosure.
FIG. 5 is an exploded perspective view of a battery module in a battery pack according to an embodiment of the present disclosure.
FIG. 6 is an exploded perspective view of a cooling fluid distribution member in a battery pack according to an embodiment of the present disclosure.
FIG. 7 is a view showing the flow of a cooling fluid in FIG. 6.
FIG. 8 is a perspective view of a battery module in a battery pack according to an embodiment of the present disclosure.
FIG. 9 is a cross-sectional view of the cooling fluid distribution member and gasket member of portion B in FIG. 8.
FIG. 10 is a cross-sectional view of a partial configuration of portion B in FIG. 8.
FIG. 11 is an exploded perspective view of FIG. 10.
FIG. 12 is a perspective view of a gasket member in a battery pack according to an embodiment of the present disclosure.
FIG. 13 is a cross-sectional view taken along line C-C' in FIG. 12.
FIG. 14 shows a case where the central axis of the coupling portion of the distribution pipe and the central axis of the cooling tube coincide in a battery pack according to an embodiment of the present disclosure.
FIG. 15 shows a case where the central axis of the coupling portion of the distribution pipe and the central axis of the cooling tube do not coincide in a battery pack according to an embodiment of the present disclosure.
FIG. 16 is a view for describing a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

Throughout this specification, when a part 'includes' a component, it means that the part may further include other components rather than excluding other components unless specifically stated to the contrary.

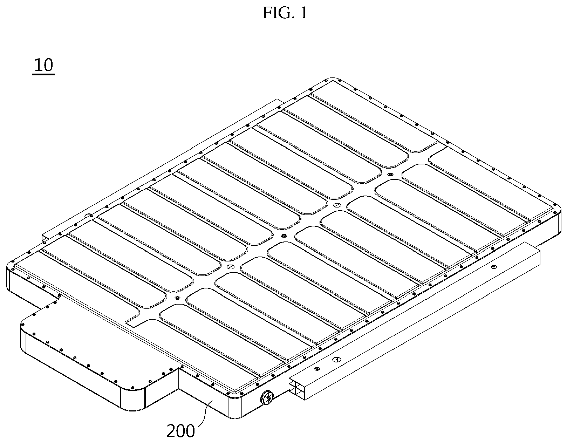

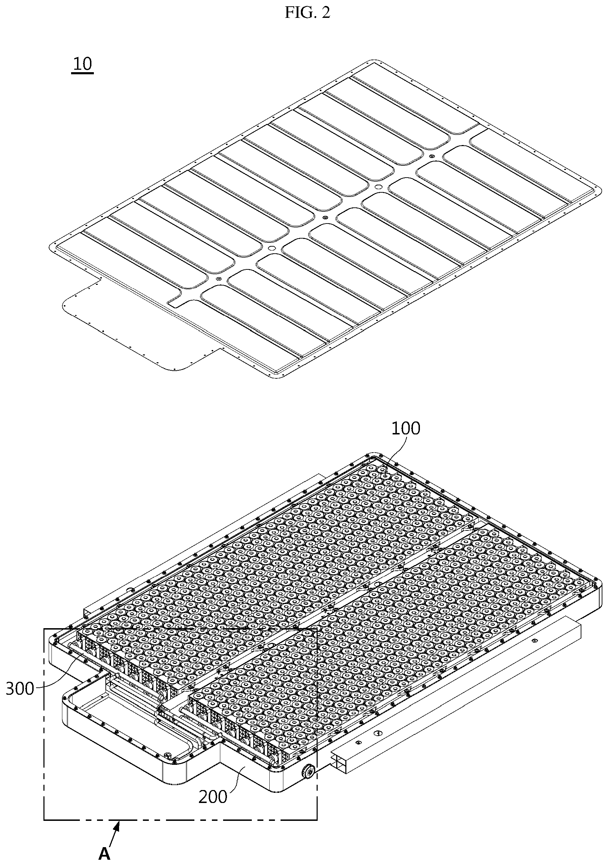

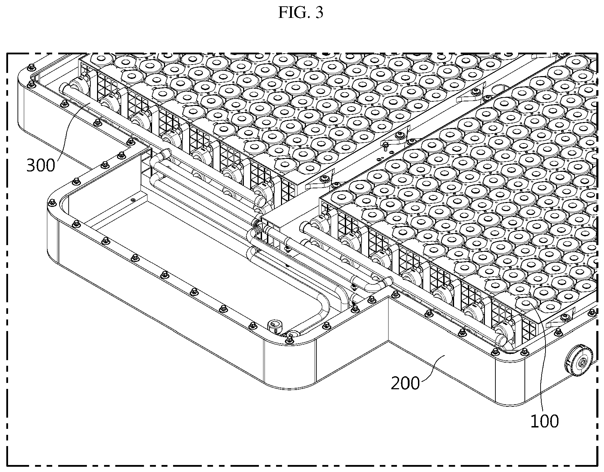

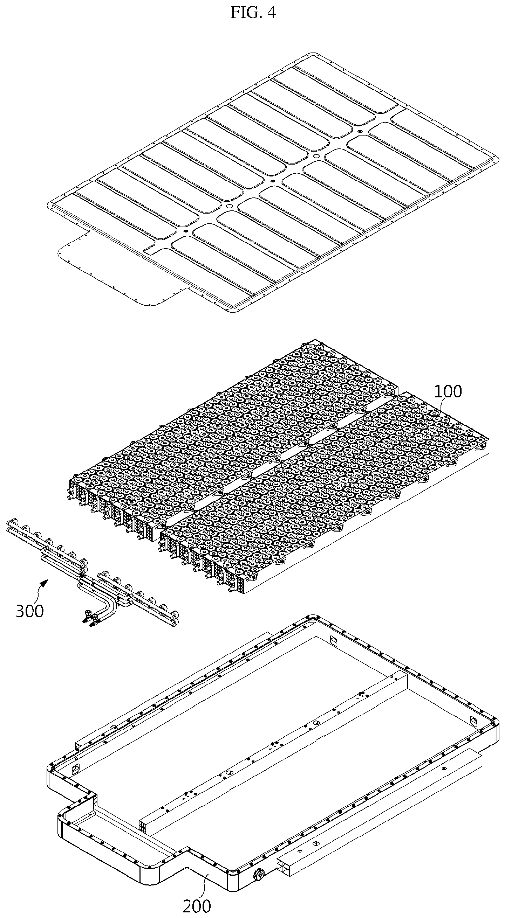

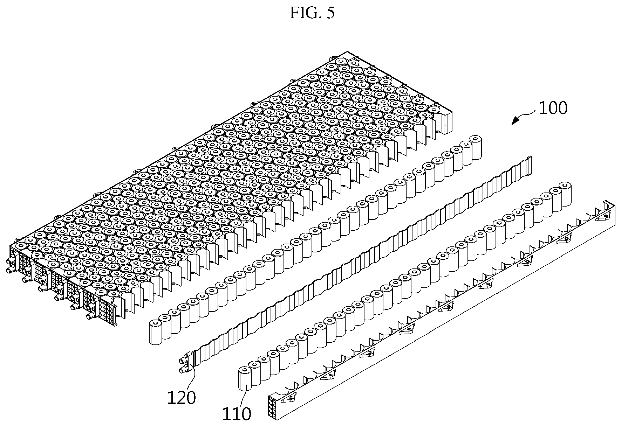

FIG. 1 is an overall perspective view of a battery pack according to an embodiment of the present disclosure, FIG. 2 is a perspective view showing the interior of FIG. 1, FIG. 3 is an enlarged view of portion A in FIG. 2, FIG. 4 is an exploded perspective view of a battery pack according to an embodiment of the present disclosure, and FIG. 5 is an exploded perspective view of a battery module in a battery pack according to an embodiment of the present disclosure.

Referring to FIGS. 1 to 5, the battery pack 10 according to an embodiment of the present disclosure includes a battery module 100, a pack case 200, and a cooling fluid distribution member 300.

Referring to FIG. 5, the battery module 100 includes a plurality of battery cells 110. And, the battery module 100 includes a plurality of cooling tubes 120. The plurality of cooling tubes 120 are disposed between the plurality of battery cells 110, and a cooling fluid for cooling the battery cells 110 flows through the cooling tubes 120. And, the battery module 100 may include a module case for accommodating the battery cells 110.

The battery cells 110 may be provided in various types. For example, the battery cells 110 may include a prismatic battery cell (not shown) or a pouch-type battery cell (not shown). The pouch-type battery cell may have a structure in which a unit cell arranged in the order of positive electrode plate-separator-negative electrode plate, or a bi-cell arranged in the order of positive electrode plate-separator-negative electrode plate-separator-positive electrode plate-separator-negative electrode plate are stacked in plurality according to the battery capacity. And, the pouch-type battery cell may have an electrode lead. The electrode lead is a type of terminal that is exposed to the outside and connected to an external device and may be made of a conductive material. The electrode lead may include a positive electrode lead and a negative electrode lead.

Alternatively, as shown in FIGS. 2 to 5, the battery cell 110 may include a cylindrical battery cell. That is, the battery cell 110 provided in the battery pack 10 according to an embodiment of the present disclosure may vary, but the following description will focus on the case where the battery cell 110 is a cylindrical battery cell for convenience of description.

A cylindrical battery cell may include an electrode assembly, a battery can, a positive electrode current collector plate, a cell terminal, and a negative electrode current collector plate.

The electrode assembly includes a positive electrode plate, a negative electrode plate, and a separator, and the separator is interposed between the positive electrode plate and the negative electrode plate. And, it may be prepared as a jelly roll type in which a center hole is formed by being wound in one direction while the separator is interposed between the positive electrode plate and the negative electrode plate.

For example, the electrode assembly may be manufactured by winding a laminate formed by sequentially stacking a negative electrode plate, a separator, a positive electrode plate, and a separator at least once. Here, the positive electrode plate and the negative electrode plate may be formed in a sheet shape. That is, the electrode assembly may be a winding type electrode assembly. The electrode assembly may have any winding structure well known in the related art without limitation.

A positive electrode active material is applied on one or both sides of the positive electrode plate, and a negative electrode active material is applied on one or both sides of the negative electrode plate. The positive electrode active material coated on the positive electrode plate and the negative electrode active material coated on the negative electrode plate can be used without limitation as long as they are active materials known in the art.

And, as the separator, a porous polymer film, for example, a porous polymer film made of polyolefin polymers such as ethylene homopolymer, propylene homopolymer, ethylene/butene copolymer, ethylene/hexene copolymer, ethylene/methacrylate copolymer, and the like may be used alone or by stacking them. As another example, the separator may be a conventional porous nonwoven fabric, for example, a nonwoven fabric made of high melting point glass fiber, polyethylene terephthalate fiber, and the like.

At least one surface of the separator may include a coating layer of inorganic particles. It is also possible that the separator itself is made of a coating layer of inorganic particles. The particles constituting the coating layer may have a structure coupled to a binder so that an interstitial volume exists between adjacent particles.

The battery can is formed in a cylindrical shape to accommodate an electrode assembly inside the battery can, and may be electrically connected to a negative electrode plate of the electrode assembly. Accordingly, the battery can may have the same polarity as the negative electrode plate, that is, a negative electrode, but is not limited thereto.

And, a gap of a predetermined size is formed between the battery can and the electrode assembly (between the battery can and the positive electrode current collector plate when the positive electrode current collector plate is coupled to the electrode assembly), and an insulator may be interposed between the gap. The battery can may be made of a conductive metal, such as aluminum, steel, stainless steel, or the like, but is not limited thereto.

The positive electrode current collector plate is electrically connected to the positive electrode plate, and for example, the positive electrode current collector plate may be connected to the positive electrode plate at the top of the electrode assembly.

The cell terminal is made of a metal material having conductivity and is electrically connected to the positive electrode current collector plate. And, the cell terminal is electrically connected to the positive electrode plate of the electrode assembly through the positive electrode current collector plate, thereby having a positive polarity. That is, the cell terminal may function as a positive electrode terminal.

The negative electrode current collector plate is electrically connected to the negative electrode plate. The negative electrode current collector plate may be made of a conductive metal material such as aluminum, steel, copper, nickel, or the like.

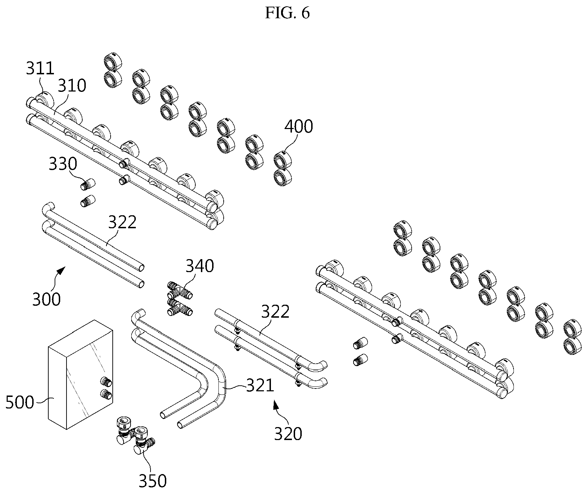

Referring to FIG. 5, the cooling tube 120 is provided in plurality. The cooling tube 120 may be provided in various tube shapes so that a cooling fluid for cooling the battery cell 110 flows. And, a plurality of cooling tubes 120 are disposed between the plurality of battery cells 110. In this case, one cooling tube 120 may cool the battery cells 110 in contact with both sides, respectively. And, the fluid flowing through the cooling tube 120 may vary, and may be, for example, water, but is not limited thereto. The cooling fluid may be supplied from a fluid supply member 500 (see FIG. 6), and the fluid supply member 500 may be connected to the cooling fluid distribution member 300.

It is advantageous that the cooling fluid flowing through each of the plurality of cooling tubes 120 flows uniformly to improve cooling performance. Referring to FIGS. 2 and 3, when the cooling tube 120 is provided in plurality, the cooling fluid distribution member 300 is coupled to the cooling tube 120 for uniformity of cooling of the battery cells 110.

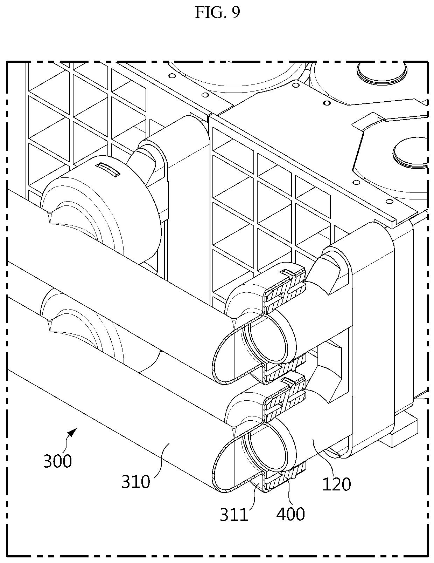

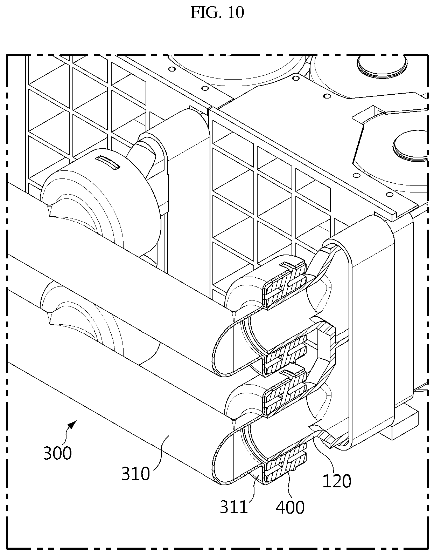

The cooling tube 120 may be coupled to the cooling fluid distribution member 300 in various ways, and for example, the cooling tube 120 may be inserted into and coupled to a coupling portion 311 formed in the distribution pipe 310 of the cooling fluid distribution member 300 (see FIGS. 9 and 10). In this case, a gasket member 400 is interposed between the cooling tube 120 and the coupling portion 311, which will be described later.

Referring to FIGS. 2 and 4, the pack case 200 accommodates the battery module 100. To this end, a receiving space for accommodating the battery module 100 may be provided in the pack case 200. And, various devices for controlling charge/discharge of the battery cell 110, such as a BMS, a current sensor, a fuse, and the like, may be accommodated in or coupled to the pack case 200. And, a pack lead may be coupled to the pack case 200.

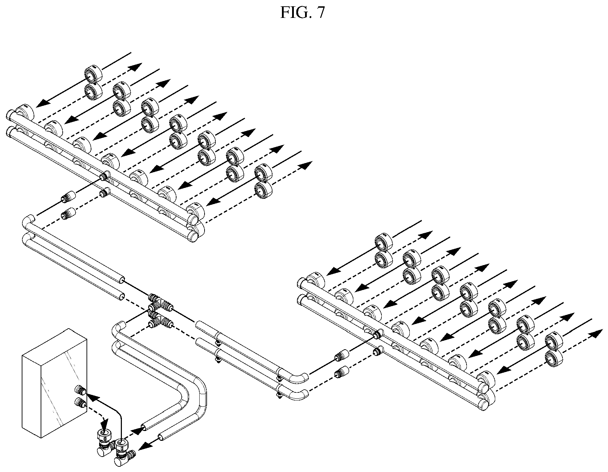

FIG. 6 is an exploded perspective view of a cooling fluid distribution member in a battery pack according to an embodiment of the present disclosure, and FIG. 7 is a view showing the flow of a cooling fluid in FIG. 6.

The cooling fluid distribution member 300 distributes the cooling fluid toward the plurality of cooling tubes 120. Here, it is preferable that the cooling fluid distribution member 300 distributes the cooling fluid uniformly to each of the plurality of cooling tubes 120.

Referring to FIG. 6, the cooling fluid distribution member 300 may be configured to include a distribution pipe 310 and a connection pipe 320. The distribution pipe 310 has a plurality of coupling portions 311 each coupled to a plurality of cooling tubes 120. The plurality of coupling portions 311 may be formed in parallel on the distribution pipe 310.

The coupling portion 311 may be formed in various ways, and for example, a cross-section thereof may be formed in a circular shape, but is not limited thereto. And, if necessary, the cross-section of the coupling portion 311 may be formed in more various shapes, such as a rectangle, a triangle, or other shapes. Here, the inner side of the coupling portion 311 is empty, and a gasket member 400 to be described later is coupled to an inner side of the coupling portion 311.

In addition, the plurality of coupling portions 311 may be spaced apart from each other to have a predetermined interval, and the cooling fluid flowing through the distribution pipe 310 moves to the cooling tube 120 through the plurality of coupling portions 311.

The coupling portion 311 is formed to protrude from the end of the distribution pipe 310, where the coupling portion 311 may be integrally formed with the distribution pipe 310, or may be manufactured separately from the distribution pipe 310 and then coupled to the distribution pipe 310.

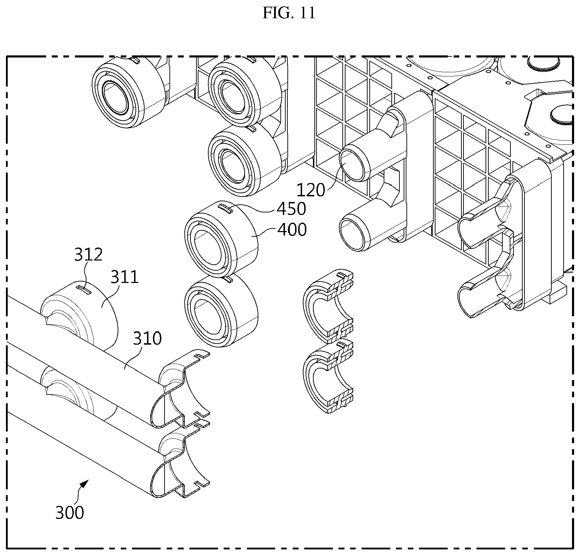

A separation prevention groove 312 (see FIG. 11) may be formed in the coupling portion 311, and a separation prevention protrusion 450 formed in the gasket member 400 may be coupled to the separation prevention groove 312. This will be described later.

Referring to FIGS. 6 and 7, the distribution pipe 310 is connected to the connection pipe 320, and the cooling fluid supplied from the fluid supply member 500 moves to the distribution pipe 310 through the connection pipe 320.

The connection pipe 320 connects the distribution pipe 310 and the fluid supply member 500. Here, the connection pipe 320 may be connected to the distribution pipe 310 through a pipe connection port 330. That is, the pipe connection port 330 connects the distribution pipe 310 and the connection pipe 320. And, the connection pipe 320 may be connected to the fluid supply member 500 through a connector 350. That is, the connector 350 connects the fluid supply member 500 and the connection pipe 320.

The connection pipe 320 may include a first connection pipe 321 and a second connection pipe 322. The first connection pipe 321 may be coupled to the fluid supply member 500 through the connector 350. And, the second connection pipe 322 may be connected to the distribution pipe 310 through the pipe connection port 330.

In addition, the second connection pipe 322 may be connected to the first connection pipe 321 through a multi-port 340. That is, the multi-port 340 connects the first connection pipe 321 and the second connection pipe 322.

The multi-port 340 may vary and, for example, may be configured as a 3 way port, as shown in FIG. 6. Here, the 3 way port may be configured to connect one first connection pipe 321 and two second connection pipes 322. For example, two second connection pipes 322 may be respectively coupled to the 3 way port on both sides with respect to the 3 way port, and one first connection pipe 321 disposed in a direction crossing the two second connection pipes 322 may be coupled to the 3 way port. However, this is only one embodiment.

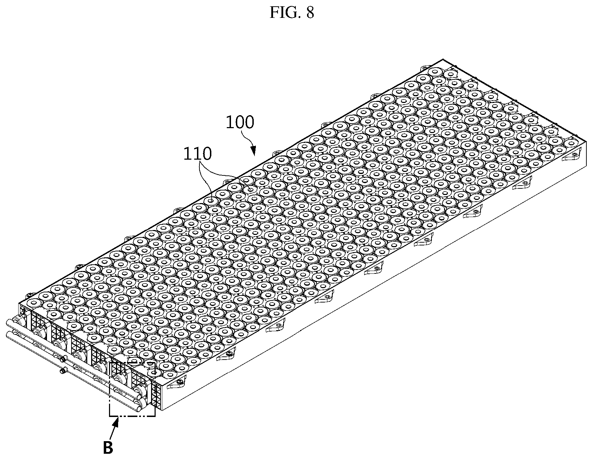

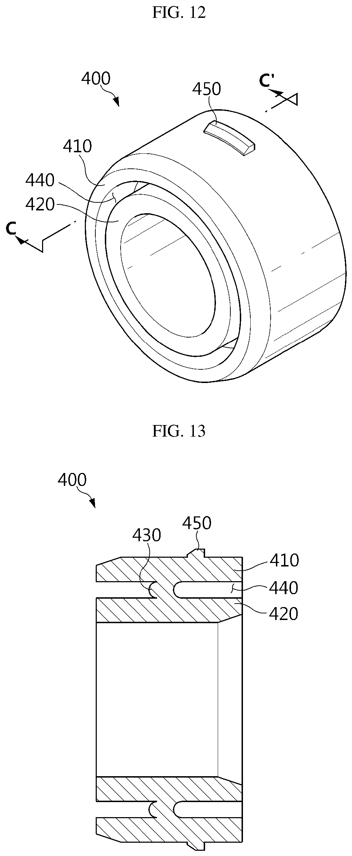

FIG. 8 is a perspective view of a battery module in a battery pack according to an embodiment of the present disclosure, FIG. 9 is a cross-sectional view of the cooling fluid distribution member and gasket member of portion B in FIG. 8, FIG. 10 is a cross-sectional view of a partial configuration of portion B in FIG. 8, FIG. 11 is an exploded perspective view of FIG. 10, FIG. 12 is a perspective view of a gasket member 400 in a battery pack according to an embodiment of the present disclosure, and FIG. 13 is a cross-sectional view taken along line C-C' in FIG. 12.

Referring to FIGS. 8 to 11, the gasket member 400 is coupled to an inner side of the coupling portion 311 of the distribution pipe 310. And, the cooling tube 120 is inserted into the gasket member 400. That is, the gasket member 400 is interposed between the distribution pipe 310 and the cooling tube 120 to prevent the cooling fluid from leaking. That is, the gap between the distribution pipe 310 and the cooling tube 120 is sealed for sealing. The gasket member 400 may be formed to have different widths, thicknesses, and sizes of grooves 440 to be described later depending on the required performance.

The gasket member 400 may be made of various materials, for example, various elastic materials. Specifically, the gasket member 400 may be made of various types of rubber, but is not limited thereto.

Referring to FIGS. 12 and 13, the gasket member 400 may be configured to include an outer portion 410, an inner portion 420, and an inner and outer connection portion 430. The outer portion 410 forms an outer side of the gasket member 400. And, the inner portion 420 forms an inner side inside the outer portion 410. And, the inner and outer connection portion 430 connects the outer portion 410 and the inner portion 420 to each other. The inner and outer connection portion 430 may be formed at various parts of the outer portion 410 and the inner portion 420, for example, at the center portion of the outer portion 410 and the inner portion 420 as shown in FIG. 13, but is not limited thereto. As used herein, the center portion does not mean only the exact center, but should be understood as a concept including not only the exact center but also locations close to the center.

And, grooves 440 may be formed on both sides of the inner and outer connection portion 430 between the outer portion 410 and the inner portion 420. Here, the groove 440 allows the gasket member 400 to maintain its sealing performance even if it is compressed or expanded.

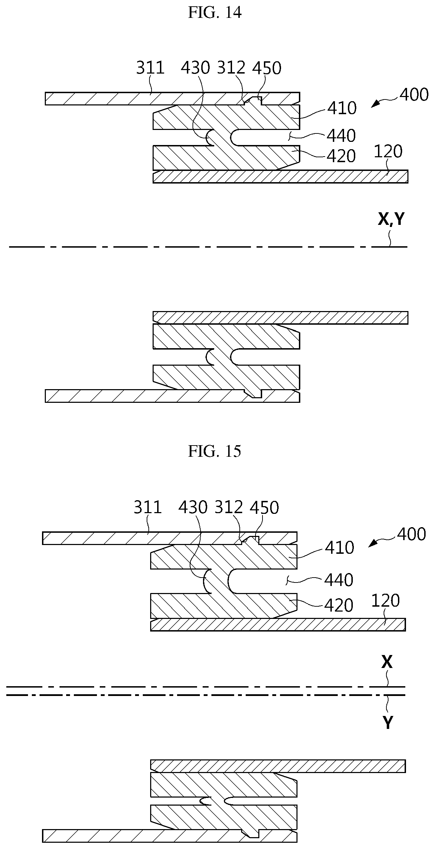

FIG. 14 shows a case where the central axis of the coupling portion of the distribution pipe and the central axis of the cooling tube coincide in a battery pack according to an embodiment of the present disclosure, and FIG. 15 shows a case where the central axis of the coupling portion of the distribution pipe and the central axis of the cooling tube do not coincide in a battery pack according to an embodiment of the present disclosure.

FIG. 14 shows an ideal state in which the central axis X of the coupling portion 311 of the distribution pipe 310 and the central axis Y of the cooling tube 120 coincide, and in many cases, due to processing errors or tolerances, assembly errors or tolerances during assembly, and the like, the central axis X of the coupling portion 311 of the distribution pipe 310 and the central axis Y of the cooling tube 120 do not coincide as shown in FIG. 15.

As such, even if the central axis X of the coupling portion 311 of the distribution pipe 310 and the central axis Y of the cooling tube 120 do not coincide, the gasket member 400 may be elastically deformed as shown in FIG. 15. Here, the groove 440 is formed in the gasket member 400 to facilitate elastic deformation of the gasket member 400.

In this way, even if the central axis X of the coupling portion 311 of the distribution pipe 310 and the central axis Y of the cooling tube 120 are twisted, the sealing of the distribution pipe 310 and the cooling tube 120 may be maintained by the elastically deformable gasket member 400 and the groove 440 formed in the gasket member 400, thereby having the effect of securing excellent sealing performance.

And, as shown in FIGS. 14 and 15, the coupling portion 311 of the distribution pipe 310 may be configured to contact the outer portion 410 of the gasket member 400, and the cooling tube 120 may be configured to contact the inner portion 420 of the gasket member 400.

Meanwhile, referring to FIG. 11, a separation prevention groove 312 may be formed in the coupling portion 311, and a separation prevention protrusion 450 coupled to the separation prevention groove 312 may be formed in the gasket member 400.

It is advantageous for the cooling tube 120 to be inserted if the gasket member 400 is first coupled to the coupling portion 311 of the distribution pipe 310. Therefore, the gasket member 400 may first be coupled to the coupling portion 311 of the distribution pipe 310 prior to insertion of the cooling tube 120.

Here, when the gasket member 400 is coupled to the coupling portion 311, it may be separated from the coupling portion 311, and in order to prevent this, a separation prevention structure may be formed in the coupling portion 311 and the gasket member 400. Here, the separation prevention structure may vary, and for example, it may be configured such that a separation prevention groove 312 is formed in the coupling portion 311, a separation prevention protrusion 450 is formed in the gasket member 400, and the separation prevention protrusion 450 is coupled to the separation prevention groove 312.

Referring to FIG. 13, a pair of separation prevention protrusions 450 may be formed on the upper and lower sides of the gasket member 400, but this is only one embodiment.

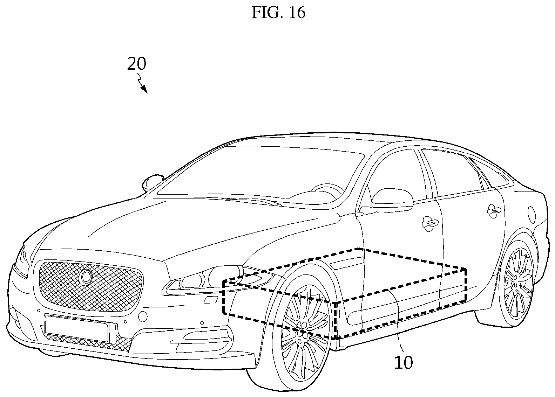

FIG. 16 is a view for describing a vehicle including a battery pack according to an embodiment of the present disclosure.

Referring to FIG. 16, a vehicle 20 according to an embodiment of the present disclosure may include one or more battery packs 10 described above. And, the battery pack 10 according to an embodiment of the present disclosure may be applied to the vehicle 20, for example, a predetermined vehicle 20 provided to use electricity, such as an electric vehicle or a hybrid vehicle.

And, the vehicle 20 according to an embodiment of the present disclosure may further include various other components included in the vehicle 20 in addition to the battery pack 10. For example, the vehicle 20 according to an embodiment of the present disclosure may further include a vehicle body, a motor, or a control device such as an electronic control unit (ECU) in addition to the battery pack 10 according to an embodiment of the present disclosure.

Also, an energy storage device according to an embodiment of the present disclosure includes one or more battery packs 10 according to an embodiment of the present disclosure described above. In addition, the energy storage device according to an embodiment of the present disclosure may further include general components included in energy storage devices in addition to the battery pack 10. In particular, the energy storage device according to an embodiment of the present disclosure may be a residential (building) energy storage device for home or office use, which is used to store energy in a residential home, office home, or building.

In addition, in order to have a large energy capacity, the energy storage device may include a plurality of battery packs 10 according to an embodiment of the present disclosure electrically connected to each other. In addition, the energy storage device according to an embodiment of the present disclosure may further include various other components of the energy storage device known at the time of filing the present disclosure. Moreover, this energy storage device may be used in various places or devices, such as a smart grid system or an electric charging station.

According to the various embodiments described above, there may be provided a battery pack 10 capable of guiding uniform distribution of the cooling fluid toward the cooling tubes 120 and a vehicle 20 including the same.

Accordingly, it is possible to provide a battery pack 10 capable of securing cooling performance through uniform flow of the cooling fluid and a vehicle 20 including the same.

In addition, according to the various embodiments described above, it is possible to provide a battery pack 10 that facilitates the formation of cooling channels and is more advantageous for structural design changes, and a vehicle 20 including the same.

The terms indicating directions as used herein such as upper, lower, left, and right are used for convenience of description only, and it is obvious to those skilled in the art that the term may change depending on the position of the stated element or an observer.

### INDUSTRIAL APPLICABILITY

The present disclosure relates to a battery pack and a vehicle including the same, and is particularly applicable to industries related to secondary batteries.

## Claims

1. A battery pack (10), comprising:
a battery module (100) comprising a plurality of battery cells (110), and having a plurality of cooling tubes (120) disposed between the plurality of battery cells (110) and through which a cooling fluid for cooling the battery cells (110) flows;
a pack case (200) accommodating the battery module (100); and
a cooling fluid distribution member (300) that distributes a cooling fluid toward the plurality of cooling tubes (120),
wherein the cooling tube (120) is inserted into and coupled to the cooling fluid distribution member (300),
wherein the battery pack (10) further comprises a fluid supply member (500) that supplies a cooling fluid,
wherein the cooling fluid distribution member (300) comprises:
a distribution pipe (310) having a plurality of coupling portions (311) respectively coupled to the plurality of cooling tubes (120); and
a connection pipe (320) connecting the distribution pipe (310) and the fluid supply member (500)
**characterized in that** the battery pack (10) further comprises:
a gasket member (400) coupled to an inner side of the coupling portion (311) of the distribution pipe (310) and into which the cooling tube (120) is inserted.

2. The battery pack (10) according to claim 1, comprising
a pipe connection port (330) connecting the distribution pipe (310) and the connection pipe (320).

3. The battery pack (10) according to claim 1,
wherein the connection pipe (320) comprises:
a first connection pipe (321) coupled to the fluid supply member (500); and
a second connection pipe (322) connected to the first connection pipe (321) and connected to the distribution pipe (310).

4. The battery pack (10) according to claim 3, comprising
a multi-port (340) connecting the first connection pipe (321) and the second connection pipe (322).

5. The battery pack (10) according to claim 4,
wherein the multi-port (340) is configured as a 3 way port, and
the 3 way port connects one first connection pipe (321) and two second connection pipes (322).

6. The battery pack (10) according to claim 1, comprising
a connector (350) connecting the fluid supply member (500) and the connection pipe (320).

7. The battery pack (10) according to claim 1,
wherein the gasket member (400) is made of an elastic material.

8. The battery pack (10) according to claim 7,
wherein the gasket member (400) is made of rubber.

9. The battery pack (10) according to claim 1,
wherein the gasket member (400) comprises:
an outer portion (410) forming an outer side;
an inner portion (420) forming an inner side inside the outer portion; and
an inner and outer connection portion (430) connecting the outer portion (410) and the inner portion (420).

10. The battery pack (10) according to claim 9,
wherein grooves (440) are formed on both sides of the inner and outer connection portion (430) between the outer portion (410) and the inner portion (420).

11. The battery pack (10) according to claim 10,
wherein the coupling portion (311) contacts the outer portion (410), and the cooling tube (120) contacts the inner portion (420).

12. The battery pack (10) according to claim 1,
wherein a separation prevention groove (312) is formed in the coupling portion (311), and
a separation prevention protrusion (450) coupled to the separation prevention groove (312) is formed in the gasket member (400).

13. A vehicle (20) comprising a battery pack (10) according to any one of claims 1 to 12.

## Patentansprüche

1. Batteriepack (10), umfassend:
ein Batteriemodul (100), welches eine Mehrzahl von Batteriezellen (110) umfasst, und welches eine Mehrzahl von Kühlungsschläuchen (120) aufweist, welche zwischen der Mehrzahl von Batteriezellen (110) angeordnet sind und durch welche eine Kühlungsfluid zum Kühlen der Batteriezellen (110) strömt;
ein Packgehäuse (200), welches das Batteriemodul (100) aufnimmt; und
ein Kühlungsfluid-Verteilungselement (300), welches ein Kühlungsfluid auf die Mehrzahl von Kühlungsschläuche (120) verteilt,
wobei der Kühlungsschlauch (120) eingeführt ist in und gekoppelt ist mit dem Kühlungsfluid-Verteilungselement (300),
wobei der Batteriepack (10) ferner ein Fluidzuführelement (500) umfasst, welches ein Kühlungsfluid zuführt,
wobei das Kühlungsfluid-Verteilungselement (300) umfasst:
eine Verteilungsleitung (310), welche eine Mehrzahl von Kopplungsabschnitten (311) aufweist, welche jeweils mit der Mehrzahl von Kühlungsschläuchen (120) gekoppelt sind; und
eine Verbindungsleitung (320), welche die Verteilungsleitung (310) und das Fluidzuführelement (500) verbindet,
**dadurch gekennzeichnet, dass** der Batteriepack (10) ferner umfasst:
ein Dichtungselement (400), welches mit einer inneren Seite der Kopplungsabschnitte (311) der Verteilungsleitung (310) gekoppelt ist und in welches der Kühlungsschlauch (120) eingeführt ist.

2. Batteriepack (10) nach Anspruch 1, umfassend
einen Leitungsverbindungsanschluss (330), welcher die Verteilungsleitung (310) und die Verbindungsleitung (320) verbindet.

3. Batteriepack (10) nach Anspruch 1,
wobei die Verbindungsleitung (320) umfasst:
eine erste Verbindungsleitung (321), welche mit dem Fluidzuführelement (500) gekoppelt ist; und
eine zweite Verbindungsleitung (322), welche mit der ersten Verbindungsleitung (321) verbunden ist und mit der Verteilungsleitung (310) verbunden ist.

4. Batteriepack (10) nach Anspruch 3, umfassend
einen Mehrfachanschluss (340), welcher die erste Verbindungsleitung (321) und die zweite Verbindungsleitung (322) verbindet.

5. Batteriepack (10) nach Anspruch 4,
wobei der Mehrfachanschluss (340) als ein 3-Weganschluss eingerichtet ist, und
der 3-Weganschluss eine erste Verbindungsleitung (321) und zwei zweite Verbindungsleitungen (322) verbindet.

6. Batteriepack (10) nach Anspruch 1, umfassend
einen Konnektor (350), welcher das Fluidzuführelement (500) und die Verbindungsleitung (320) verbindet.

7. Batteriepack (10) nach Anspruch 1,
wobei das Dichtungselement (400) aus einem elastischen Material hergestellt ist.

8. Batteriepack (10) nach Anspruch 7,
wobei das Dichtungselement (400) aus Gummi hergestellt ist.

9. Batteriepack (10) nach Anspruch 1,
wobei das Dichtungselement (400) umfasst:
einen äußeren Abschnitt (410), welcher eine äußere Seite bildet;
einen inneren Abschnitt (420), welcher eine innere Seite innerhalb des äußeren Abschnitts bildet; und
einen inneren und äußeren Verbindungsabschnitt (430), welcher den äußeren Abschnitt (410) und den inneren Abschnitt (420) verbindet.

10. Batteriepack (10) nach Anspruch 9,
wobei Nuten (440) an beiden Seiten des inneren und äußeren Verbindungsabschnitts (430) zwischen dem äußeren Abschnitt (410) und dem inneren Abschnitt (420) gebildet sind.

11. Batteriepack (10) nach Anspruch 10,
wobei der Kopplungsabschnitt (311) mit dem äußeren Abschnitt (410) in Kontakt steht und der Kühlungsschlauch (120) mit dem inneren Abschnitt (420) in Kontakt steht.

12. Batteriepack (10) nach Anspruch 1,
wobei eine Trennungsverhinderungsnut (312) in dem Kopplungsabschnitt (311) gebildet ist, und
ein Trennungsverhinderungsvorsprung (450), welcher mit der Trennungsverhinderungsnut (312) gekoppelt ist, in dem Dichtungselement (400) gebildet ist.

13. Fahrzeug (20), umfassend einen Batteriepack (10) nach einem der Ansprüche 1 bis 12.

## Revendications

1. Un bloc-batterie (10) comprenant :
un module de batterie (100) comprenant une pluralité de cellules de batterie (110) et comportant une pluralité de tubes de refroidissement (120) disposés entre la pluralité de cellules de batterie (110) et à travers lesquels circule un fluide de refroidissement destiné à refroidir les cellules de batterie (110) ;
un boîtier de bloc (200) logeant le module de batterie (100) ; et
un élément de distribution de fluide de refroidissement (300) qui distribue un fluide de refroidissement vers la pluralité de tubes de refroidissement (120),
dans lequel le tube de refroidissement (120) est inséré dans l'élément de distribution de fluide de refroidissement (300) et couplé à celui-ci,
dans lequel le bloc-batterie (10) comprend en outre un élément d'alimentation en fluide (500) qui alimente un fluide de refroidissement,
dans lequel l'élément de distribution de fluide de refroidissement (300) comprend :
un tuyau de distribution (310) comportant une pluralité de parties de couplage (311) respectivement couplées à la pluralité de tubes de refroidissement (120) ; et
un tuyau de raccordement (320) reliant le tuyau de distribution (310) et l'élément d'alimentation en fluide (500)
**caractérisé en ce que** le bloc-batterie (10) comprend en outre :
un élément d'étanchéité (400) couplé à un côté intérieur de la partie de couplage (311) du tuyau de distribution (310) et dans lequel le tube de refroidissement (120) est inséré.

2. Le bloc-batterie (10) selon la revendication 1, comprenant
un port de raccordement de tuyau (330) reliant le tuyau de distribution (310) et le tuyau de raccordement (320).

3. Le bloc-batterie (10) selon la revendication 1,
dans lequel le tuyau de raccordement (320) comprend :
un premier tuyau de raccordement (321) couplé à l'élément d'alimentation en fluide (500) ; et
un deuxième tuyau de raccordement (322) raccordé au premier tuyau de raccordement (321) et raccordé au tuyau de distribution (310).

4. Le bloc-batterie (10) selon la revendication 3, comprenant
un multi-port (340) reliant le premier tuyau de raccordement (321) et le deuxième tuyau de raccordement (322).

5. Le bloc-batterie (10) selon la revendication 4,
dans lequel le multi-port (340) est configuré comme un port à 3 voies, et
le port à 3 voies relie un premier tuyau de raccordement (321) et deux seconds tuyaux de raccordement (322).

6. Le bloc-batterie (10) selon la revendication 1, comprenant
un connecteur (350) reliant l'élément d'alimentation en fluide (500) et le tuyau de raccordement (320).

7. Le bloc-batterie (10) selon la revendication 1,
dans lequel l'élément d'étanchéité (400) est constitué d'un matériau élastique.

8. Le bloc-batterie (10) selon la revendication 7,
dans lequel l'élément d'étanchéité (400) est constitué de caoutchouc.

9. Le bloc-batterie (10) selon la revendication 1,
dans lequel l'élément d'étanchéité (400) comprend :
une partie extérieure (410) formant un côté extérieur ;
une partie intérieure (420) formant un côté intérieur à l'intérieur de la partie extérieure ; et
une partie de connexion intérieure et extérieure (430) reliant la partie extérieure (410) et la partie intérieure (420).

10. Le bloc-batterie (10) selon la revendication 9,
dans lequel des rainures (440) sont formées sur les deux côtés de la partie de connexion intérieure et extérieure (430) entre la partie extérieure (410) et la partie intérieure (420).

11. Le bloc-batterie (10) selon la revendication 10,
dans lequel la partie de couplage (311) est en contact avec la partie extérieure (410) et le tube de refroidissement (120) est en contact avec la partie intérieure (420).

12. Le bloc-batterie (10) selon la revendication 1,
dans lequel une rainure anti-séparation (312) est formée dans la partie de couplage (311), et
une saillie anti-séparation (450) couplée à la rainure anti-séparation (312) est formée dans l'élément d'étanchéité (400).

13. Véhicule (20) comprenant un bloc-batterie (10) selon l'une quelconque des revendications 1 à 12.
